# EUROPÄISCHE PATENTSCHRIFT

(11) **EP 2 739 935 B1**
(45) Veröffentlichungstag und Bekanntmachung des Hinweises auf die Patenterteilung: **21.10.2015**
(21) Anmeldenummer: 11743503.2
(22) Anmeldetag: 03.08.2011
(51) Int. Cl.: G01B 5/00, G01B 5/008

(54) **KOORDINATENMESSGERÄT ZUR VERMESSUNG EINES WERKSTÜCKES**
CO-ORDINATE MEASURING DEVICE FOR MEASURING A WORKPIECE
INSTRUMENT DE MESURE DE COORDONNÉES POUR LA MESURE D'UNE PIÈCE

(43) Veröffentlichungstag der Anmeldung: 11.06.2014
(73) Patentinhaber: Carl Zeiss Industrielle Messtechnik GmbH, 73447 Oberkochen (DE)
(72) Erfinder: MATZKOVITS, Berthold, 89547 Gerstetten (DE)
(74) Vertreter: Carl Zeiss AG - Patentabteilung
(86) Internationale Anmeldenummer: PCT/EP2011/063384
(87) Internationale Veröffentlichungsnummer: WO 2013/017171

(56) Entgegenhaltungen:
- EP-A2- 1 335 180
- DE-U1- 20 012 469
- US-A- 3 639 993
- US-A- 6 161 298
- US-A1- 2010 083 517
- US-B1- 6 829 838

## Beschreibung

Die Erfindung betrifft ein Koordinatenmessgerät zur Vermessung eines Werkstückes das folgende Komponenten umfasst:
a) einen Sensor zur Erfassung der Werkstückoberfläche des Werkstückes
b) eine Mechanik zum Verfahren des Sensors relativ zum Werkstück in einer oder mehreren Koordinatenrichtungen (x, y, z), wobei diese Mechanik wiederum folgendes umfasst:
   - einen ersten horizontalen Längsträger mit einer ersten horizontalen Führung
   - einen zweiten horizontalen Längsträger mit einer zweiten horizontalen Führung, die parallel und beabstandet zur ersten horizontalen Führung ausgerichtet ist
   - wenigstens eine erste vertikale Stütze und eine zweite vertikale Stütze, wobei mit dem oberen Ende der ersten vertikalen Stütze und mit dem oberen Ende der zweiten vertikalen Stütze der erste horizontale Längsträger verbunden ist
   - wenigstens eine dritte vertikale Stütze und eine vierte vertikale Stütze, wobei mit dem oberen Ende der dritten vertikalen Stütze und mit dem oberen Ende der vierten vertikalen Stütze der zweite horizontale Längsträger verbunden ist
   - einen ersten Messschlitten zum Verfahren des Sensors in einer ersten horizontalen Koordinatenrichtung der entlang der ersten horizontalen Führung und der zweiten horizontalen Führung geführt ist.

Ein solches Koordinatenmessgerät ist bereits schon seit längerem aus dem Stand der Technik bekannt.

Beispielsweise zeigt das US-Patent US 3,639,993 ein derartiges Koordinatenmessgerät, das häufig als Brückenmessgerät bezeichnet wird. Hierin ist ein Koordinatenmessgerät gezeigt, bei dem zwei horizontale Längsträger mit horizontalen Führungen vorgesehen sind, die parallel zueinander sind und jeweils über drei vertikale Stützen direkt auf dem darunter liegenden Hallenboden gelagert sind. Entlang der horizontalen Führungen ist ein Brückenschlitten in einer ersten Koordinatenrichtung beweglich geführt. An diesem Brückenschlitten ist in einer zweiten horizontalen Koordinatenrichtung ein Kreuzschlitten beweglich geführt, der wiederum in der dritten Koordinatenrichtung, also in vertikaler Richtung eine Pinole beweglich führt. Am unteren Ende der Pinole ist ein Sensor befestigt, über den das Werkstück erfasst werden kann. Zur Lagerung des Werkstückes ist zwischen den parallel zueinander ausgerichteten Führungen ein Werkstücktisch vorgesehen, der unabhängig von den Führungen auf dem Hallenboden gelagert ist.

Derartige Koordinatenmessgeräte werden oftmals in Fertigungsumgebungen eingesetzt und sind besonders geeignet, um große Werkstücke aufzunehmen. Die Werkstücke können sowohl stirnseitig einfach auf den Werkstücktisch transportiert werden, beispielsweise mit einem Kran oder mit einem Gabelstapler. Aber auch seitlich ist der Werkstücktisch bedingt durch die hochgesetzten Führungen und die relativ weit auseinander liegenden vertikalen Stützen gut zugänglich.

Problematisch wird es allerdings dann, wenn sich der Boden verformt. Eine solche Verformung kann beispielsweise durch ein Absenken des Fundamentes geschehen oder durch schwere Werkstücke. Dies führt dazu, dass sich die Mechanik des Koordinatenmessgerätes verformt und hierdurch erhebliche Messfehler auftreten.

Ein anderes Koordinatenmessgerät mit einem ähnlichen Aufbau ist aus dem US-Patent US 6,161,298 bekannt. Hierin ist ein Koordinatenmessgerät gezeigt, bei dem ebenfalls zwei horizontale Längsträger mit horizontalen Führungen vorgesehen sind, die parallel zueinander sind und jeweils über zwei vertikale Stützen auf einem rechteckigen Rahmen gelagert sind, wobei der Rahmen wiederum über Schwingungsdämpfer auf dem Boden gelagert ist. Jede der Stützen ist am unteren Ende kippbar auf dem Rahmen gelagert und am oberen Ende mit einem der Längsträger verschraubt und zusätzlich über einen Verbinder mit einem Polymerbetonkörper in einer oder mehreren Richtungen steif verbunden. Dieser Polymerbetonkörper umgibt hierbei sowohl den rechteckigen Rahmen, als auch die Stützen. Damit die Stützen gegenüber dem Polymerbetonkörper beweglich bleiben, sind im Polymerbetonkörper Rohre eingegossen, in denen die Stützen verlaufen. Entlang der horizontalen Führungen ist ein Brückenschlitten in einer ersten Koordinatenrichtung beweglich geführt. An diesem Brückenschlitten ist in einer zweiten horizontalen Koordinatenrichtung ein Kreuzschlitten beweglich geführt, der wiederum in der dritten Koordinatenrichtung, also in vertikaler Richtung eine Pinole beweglich führt. Am unteren Ende der Pinole ist ein Sensor befestigt, über den das Werkstück erfasst werden kann. Zur Lagerung des Werkstückes ist auf dem rechteckigen. Rahmen ein Messtisch gelagert.

Die europäische Veröffentlichungsschrift EP 1335180 A2 zeigt ein Koordinatenmessgerät, das offensichtlich sehr ähnlich aufgebaut ist wie das Koordinatenmessgerät nach dem US-Patent US 6,161,298. Hierin ist zwar nicht im Einzelnen beschrieben, wie die vertikalen Stützen, auf denen die Längsträger mit den Führungen befestigt sind, genau auf dem rechteckigen Rahmen aufliegen und wie diese Stützen konkret im Polymerbeton eingegossen sind und an diesem befestigt sind, da dies nicht der eigentliche Gegenstand dieser Patentanmeldung ist. Allerdings ergibt sich aus der augenscheinlichen Übereinstimmung der Figur 4 dieser Druckschrift mit Figur 1 des US-Patentes US 6,161,298, dass es sich hierbei offensichtlich um den gleichen Typ Koordinatenmessgerät handeln dürfte. Anders als in dem US-Patent US 6,161,298 ist in der europäischen Veröffentlichungsschrift EP 1335180 A2 der Messtisch nicht auf dem rechteckigen Rahmen gelagert. Vielmehr ist sowohl der rechteckige Rahmen als auch der Messtisch auf vier gemeinsam genutzten Stützelementen gelagert. Hierdurch kann eine Verbiegung des Koordinatenmessgerätes infolge hohen Werkstückgewichtes vermieden werden.

Die im US-Patent US 6,161,298 und der europäischen Veröffentlichungsschrift EP 1335180 A2 gezeigten Koordinatenmessgeräte haben sich in der Vergangenheit bewährt. Diese sind allerdings nur für relativ kleine Werkstücke geeignet. Eine Vergrößerung der Koordinatenmcssgeräte auf größere Messvolumina, mit denen dann auch große Werkstücke gemessen werden können ist nicht ohne weiteres möglich. Einer der Gründe ist, dass dann der zu verwendende Polymerbetonkörper sehr groß und auch schwer werden würde und damit schwer zu transportieren ist. Außerdem würde sich bei einer Vergrößerung des Koordinatenmessgerätes auch das Problem ergeben, dass bei einer Verformung des Bodens sich die Belastungen in den Schwingungsdämpfern oder Stützelementen ändern könnten, hierdurch sich die Mechanik des Koordinatenmessgerätes verformt und hierdurch erhebliche Messfehler auftreten.

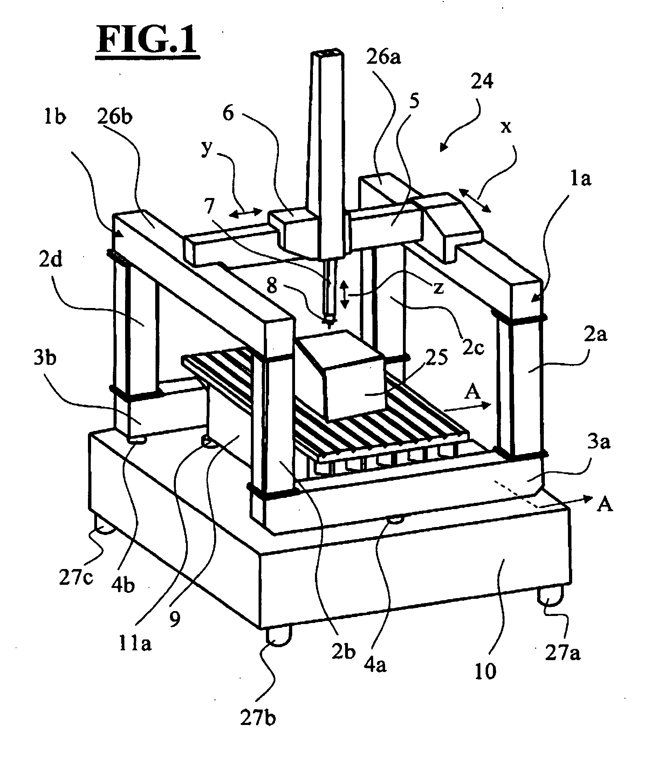

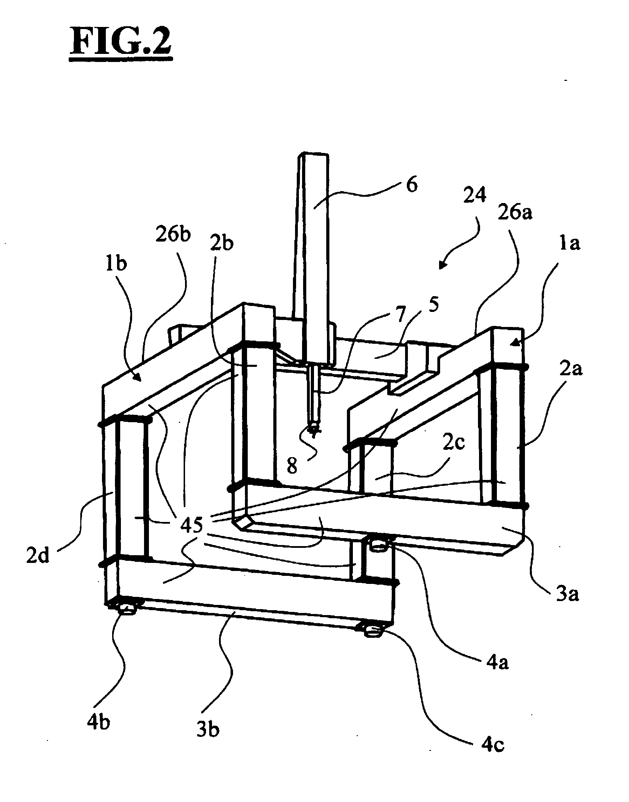

Die deutsche Gebrauchsmusterschrift DE 200 12 469 U1 zeigt ein Koordinatenmessgerät mit einem als Stahl-Schweißkonstruktion ausgeführten Untergestell, das einen rechteckigen Aufspanntisch trägt. An den vier Ecken des Aufspanntisches sind Säulen angebracht, an denen parallel zur Längsseite des Aufspanntisches Führungsschienen befestigt sind, entlang denen ein brückenartiger Schlitten geführt ist. Entlang dem brückenartigen Schlitten ist ein zweiter Schlitten beweglich geführt, wobei an diesem zweiten Schlitten in vertikaler Richtung ein dritter Schlitten geführt ist, an dessen unteren Ende ein Tastkopf befestigt ist. Die besagten Säulen sind parallel zu den Schmalseiten des Aufspanntisches durch Streben verbunden. Näheres hierzu ist dem Dokument nicht zu entnehmen. Den Figuren 1 und 2 ist jedoch in Zusammenhang mit der Beschreibung zu entnehmen, dass die Streben offensichtlich oberhalb der Säulen verlaufen.

Ausgehend von diesem Stand der Technik liegt der Erfindung die Aufgabe zugrunde ein Koordinatenmessgerät der eingangs genannten Art anzugeben, das sich insbesondere für große Werkstücke eignet und bei dem die Genauigkeit nicht durch Verformung des Bodens beeinflusst wird.

Die Aufgabe wird durch die Merkmale des Anspruches 1 gelöst.

Eine Besonderheit des Koordinatenmessgerätes nach Anspruch 1 ist darin zu sehen, dass die Mechanik, die zum Verfahren des Sensors relativ zum Werkstück in einer oder mehreren Koordinatenrichtungen vorgesehen ist, einen steifen Rahmen aufweist, der folgendes umfasst:
- einen ersten horizontalen Längsträger mit einer ersten horizontalen Führung
- einen zweiten horizontalen Längsträger mit einer zweiten horizontalen Führung, die parallel und beabstandet zur ersten horizontalen Führung ausgerichtet ist
- wenigstens eine erste vertikale Stütze und eine zweite vertikale Stütze, wobei mit dem oberen Ende der ersten vertikalen Stütze und mit dem oberen Ende der zweiten vertikalen Stütze der erste horizontale Längsträger steif verbunden ist
- wenigstens eine dritte vertikale Stütze und eine vierte vertikale Stütze, wobei mit dem oberen Ende der dritten vertikalen Stütze und mit dem oberen Ende der vierten vertikalen Stütze der zweite horizontale Längsträger steif verbunden ist
- einen ersten Querträger, der quer zur Längsrichtung des ersten Längsträgers und des zweiten Längsträgers ausgerichtet ist und mit dem das untere Ende der ersten Stütze und das untere Ende der dritten Stütze steif verbunden ist
- einen zweiten Querträger, der quer zur Längsrichtung des ersten Längsträgers und des zweiten Längsträgers ausgerichtet ist und mit dem das untere Ende der zweiten Stütze und das untere Ende der vierten Stütze steif verbunden ist.

Ein derart aufgebauter steifer Rahmen bei dem die Längsträger, die vertikalen Stützen und die Querträger in der beschriebenen Weise steif miteinander verbunden sind weist erhebliche Vorteile auf.

Obwohl hierdurch einerseits ein Koordinatenmessgerät geschaffen ist, das sich für relativ große Werkstücke, wie beispielsweise Automobilkarosserien eignet, kann hierdurch dennoch der Vorteil genutzt werden, dass die Lage der horizontalen Führungen ziemlich genau festgelegt ist. Nachdem nämlich der Rahmen sehr genau gefertigt werden kann, können hierdurch von vornherein Justageprobleme vermieden werden, wie sie bei Koordinatcnmessgeräten auftreten, bei denen jede vertikale Stütze separat, beispielsweise über Dübel, auf dem Boden befestigt werden muss. Trotzdem kann der Rahmen sehr platzsparend zum Kunden transportiert werden, indem dieser in seine Einzelteile (Längsträger, Querträger und die Stützen) zerlegt wird und dann zerlegt transportiert wird. Der Rahmen wird dann erst beim Kunden montiert, beispielsweise durch Verschrauben dieser Bauteile.

Ein solcher Rahmen gewährleistet auch eine sehr hohe Steifigkeit. Die Bezeichnung "steif" ist im Zusammenhang mit dem steifen Rahmen so zu verstehen, dass der Rahmen insgesamt steif gegenüber Kräften, Biegemomenten und Torsionsmomenten ist. Dies wird einerseits durch eine ausreichend steife Ausgestaltung der Bauteile des steifen Rahmens, also der Längsträger, der Stützen und der Querträger erreicht. Andererseits wird dies durch ausreichend steife Verbindungen zwischen diesen Bauteilen erreicht, also durch eine steife Verbindung zwischen Stütze und Querträger und zwischen Stütze und Längsträger. Verformungen des Bodens ziehen aufgrund der hohen Steifigkeit des Rahmens nur wesentlich geringere Verformungen der Führungen nach sich.

Außerdem ist eine sehr gute Zugänglichkeit von den Stirnseiten des Koordinatenmessgerätes als auch von den Seiten her gegeben.

Die Mechanik des Koordinatenmessgerätes gemäß Anspruch 1 umfasst außerdem eine Lagerung über die der erste Querträger des oben beschriebenen steifen Rahmens und der zweite Querträger des oben beschriebenen steifen Rahmens gelagert sind.

Außerdem umfasst die Mechanik des Koordinatenmessgerätes gemäß Anspruch 1 zumindest einen ersten Messschlitten zum Verfahren des Sensors in einer ersten horizontalen Koordinatenrichtung, wobei dieser Messschlitten entlang der ersten horizontalen Führung und der zweiten horizontalen Führung des beschriebenen steifen Rahmens geführt ist.

Neben der Mechanik des Koordinatenmessgerätes umfasst das Koordinatenmessgerät gemäß Anspruch 1 außerdem einen Sensor, der von der Mechanik in zumindest einer Koordinatenrichtung verfahren werden kann. Dieser Sensor ist zur Erfassung der Werkstückoberfläche eines Werkstückes vorgesehen und kann sehr unterschiedlich ausgestaltet sein. Der Sensor kann beispielsweise taktil oder optisch ausgestaltet sein. Als taktiler Sensor kann beispielsweise ein sogenannter schaltender Sensor verwendet werden, der bei Berührung eines Werkstückes mit seinem Antastformkörper ein Signal erzeugt oder ein messender Sensor, dessen Antastformkörper bei Berührung des Werkstückes in den drei Koordinatenrichtungen ausgelenkt werden kann und diese Auslenkung durch Messsysteme erfasst und bei der Messung berücksichtigt wird. Als optischer Sensor kann beispielsweise eine Digitalkamera verwendet werden oder ein Lasertriangulationssensor.

Weiterbildungen der Erfindung befinden sich in den abhängigen Ansprüchen 2 bis 16.

Hinsichtlich der Lagerung können eine Vielzahl von Maßnahmen vorgenommen werden um die Auswirkungen von den oben bereits angesprochenen Verformungen des Bodens (beispielsweise infolge von Schwingungen) weiter zu reduzieren.

Aufgrund der Größe des Koordinatenmessgerätes sollte die Lagerung drei oder mehr Auflager umfassen, über die die Querträger auf einer Rahmenauflage gelagert sind, insbesondere auf einer Rahmenauflage, die weitgehend steif ist. Bei dieser Rahmenauflage kann es sich um unterschiedliche Formen handeln. Beispielsweise kann als Rahmenauflage im einfachsten Fall der Boden selbst genutzt werden, auf dem die Querträger dann über die Auflager gelagert sind. Alternativ kann ein separates Fundament verwendet werden, das dann seinerseits wiederum auf dem Boden gelagert ist. Es kann anstelle dessen auch ein Gestell, wie beispielsweise eine Stahlkonstruktion verwendet werden.

Eine weitere Reduzierung von Auswirkungen von Verformungen des Bodens kann erreicht werden, wenn von den Auflagern der Lagerung genau drei Auflager in vertikaler Richtung steif sind, wobei der erste Querträger des Rahmens auf einem ersten Auflager dieser drei Auflager gelagert ist und der zweite Querträger des Rahmens auf einem zweiten Auflager und einem dritten Auflager dieser drei Auflager gelagert ist.

Hierdurch wird ein Dreipunktlager realisiert. Sofern außer diesen drei in vertikaler Richtung steifen Auflagern keine weiteren Auflager vorgesehen sind, so ist sichergestellt, dass alle drei Auflager zu jedem Zeitpunkt auf der Rahmenauflage aufliegen und damit die auf das jeweilige Auflager wirkende Gewichtskraft konstant bleibt. Verformungen, Hebungen oder Senkungen der Rahmenauflage, wie sie beispielsweise durch lokale Absenkung des Bodens entstehen können oder durch Schwingungen des Bodens entstehen können führen damit nicht zu einer Änderung der von den drei Auflagern aufgenommenen Gewichtskräfte und folglich auch nicht zu Verformungen des steifen Rahmens.

Anders als der steife Rahmen, der auf der Rahmenauflage über eine Lagerung gelagert ist, die drei in vertikaler Richtung steife Auflager umfasst kann hingegen die Rahmenauflage selber federnd und/oder schwingungsgedämpft auf dem Boden gelagert sein. Sofern die Rahmenauflage ein Fundament ist oder ein Gestell ist, kann diese Rahmenauflage über in vertikaler Richtung und/oder horizontaler Richtung federnde und gegebenenfalls schwingungsdämpfende Auflager auf dem Boden gelagert sein, also beispielsweise über federnde Platten (beispielsweise aus Gummi und Kork hergestellt), über Spiralfedern (ggf. zusätzlich mit Schwingungsdämpfern) oder über Blattfedern.

Hinsichtlich der in vertikaler Richtung steifen Auflager der besagten Dreipunktlagerung des steifen Rahmens kann hierbei zumindest eines so ausgestaltet sein, dass es in einer horizontalen Richtung oder aber in allen beiden, senkrecht zueinander stehenden horizontalen Richtungen beweglich ist. Insbesondere kann das betreffende in vertikaler Richtung steife Auflager der besagten Dreipunktlagerung in wenigstens einer horizontalen Richtung (x) linearbeweglich sein und/oder in wenigstens einer horizontalen Richtung kippbar sein. Soweit das in vertikaler Richtung steife Auflager in einer horizontalen Richtung linearbeweglich ist, können hierdurch in der betreffenden horizontalen Richtung thermische Längenänderungen des steifen Rahmens oder auch thermisch bedingte Längenänderungen der Rahmenauflage, auf der der steife Rahmen gelagert ist ausgeglichen werden. Soweit das Auflager in einer horizontalen Richtung kippbar ist, so können beispielsweise Verbindungen der Rahmenauflage durch das betreffende Auflager in der betreffenden horizontalen Richtung kompensiert werden

Ein solches, in vertikaler Richtung steifes Auflager der besagten Dreipunktlagerung kann monolithisch aus einem Materialblock hergestellt sein, wobei die Beweglichkeit in horizontaler Richtung durch Materialschwächungen des Materialblocks erreicht wird, beispielsweise durch Einfräsungen.

Zusätzlich zu den drei in vertikaler Richtung steifen Auflagern können, sofern dies notwendig sein sollte, noch ein oder mehr in vertikaler Richtung federnde Auflager vorgesehen sein ohne die oben näher beschriebenen Vorteile einer Dreipunktlagerung mit drei in vertikaler Richtung steifen Auflagern wesentlich zu vermindern. Dies kann beispielsweise dann notwendig werden, wenn die Anforderungen an die Länge der Längsträger so sind, dass zwei Stützen nicht mehr ausreichen und somit der betreffende Längsträger durch eine oder mehrere zusätzliche Stützen gestützt werden muss, die dann wiederum auf einem Querträger aufliegt.

Bei einem Koordinatenmessgerät, bei dem dann zusätzlich zur Abstutzung jedes der beiden Längsträger jeweils zumindest eine zusätzliche vertikale Stütze benötigt wird umfasst der Rahmen der besagten Mechanik des Koordinatenmessgerätes dann zusätzlich folgendes:
- eine fünfte vertikale Stütze, mit deren oberen Ende der erste horizontale Längsträger steif verbunden ist
- eine sechste vertikale Stütze, mit deren oberen Ende der zweite horizontale Längsträger steif verbunden ist
- einen dritten Querträger, der quer zur Längsrichtung des ersten Längsträgers und des zweiten Längsträgers ausgerichtet ist und mit dem das untere Ende der fünften Stütze und das untere Ende der sechsten Stütze steif verbunden ist.

Die Lagerung der Mechanik weist dann außerdem wenigstens ein in vertikaler Richtung federndes Auflager auf, über das der dritte Querträger gelagert ist.

Der dritte Querträger sollte dann, genau wie die drei in vertikaler Richtung steifen Auflager über das in vertikaler Richtung federnde Auflager auf der Rahmenauflage gelagert sein. Als Feder für dieses federnde Auflager sollte eine Feder mit einer sehr weichen Kennlinie verwendet werden. Als Federn hierfür kommen Spiralfedern, Blattfedern oder Luftfedern in Betracht.

Eine weitere Besonderheit ist darin zu sehen, dass eine Werkstückauflage vorgesehen sein kann, auf der das zu vermessende Werkstück lagerbar ist, wobei die Werkstückauflage so ausgeführt ist, dass der Kraftfluss der Gewichtskräfte des Werkstückes direkt in die Rahmenauflage eingeführt ist Die Werkstückauflage ist also insbesondere nicht auf Komponenten des steifen Rahmens gelagert sondern direkt auf der Rahmenauflage. Hierdurch ergibt sich der weitere Vorteil, dass insbesondere hohe Werkstückgewichte nicht zu einer Verformung der Mechanik führen können. Zwar können hohe Werkstückgewichte zu einer Verformung der Rahmenauflage selber führen. Bedingt durch den oben bereits beschriebenen steifen Rahmen und die Dreipunktlagerung dieses steifen Rahmens über in vertikaler Richtung steife Auflager wird aber erreicht, dass sich hierdurch nur die Lage der Mechanik ändert. Dies ist aber völlig unproblematisch, weil dies denselben Effekt, wie ein schief aufgespanntes Werkstück hat. Verbiegungen der Mechanik, die zu Messfehlern führen würde, können hingegen vermieden werden.

Die Ausgestaltung der Werkstückauflage, auf der das zu vermessende Werkstück gelagert werden kann, kann völlig unterschiedlich sein.

Im einfachsten Fall kann der Boden selbst die Werkstückauflage sein wobei der Boden gleichzeitig dann auch die Rahmenauflage ist.

Alternativ kann die Werkstückauflage aber auch durch einen Werkstücktisch gebildet sein, der auf der Rahmenauflage gelagert ist. Abhängig von der vorgesehenen Rahmenauflage kann die Lagerung des Werkstücktisches auf der Rahmenauflage unterschiedlich sein. Handelt es sich bei der Rahmenauflage um den Boden selber oder um ein Fundament oder um ein Gestell, so könnte man vorzugsweise für den Werkstücktisch genau wie für den steifen Rahmen eine Dreipunktlagerung mit drei in vertikaler Richtung steifen Auflagern verwenden. Hierdurch wäre sichergestellt, dass der Werkstücktisch gegenüber der Rahmenauflage eine eindeutige Lage einnimmt. Zusätzlich können noch weitere Auflager vorgesehen sein, wobei diese Auflager dann in vertikaler Richtung vorzugsweise federnd ausgebildet sind. Anders als im Falle des steifen Rahmens können diese weiteren Auflager alternativ aber auch in vertikaler Richtung steif sein. Hintergrund hierzu ist folgender. Während eine Verformung des steifen Rahmens zu einer Verformung der Führungen der Messschlitten führt und damit Messungenauigkeiten nach sich zieht, wirkt sich eine Verformung des Werkstücktisches nur auf die Lage des Werkstückes aus, nicht aber auf die Genauigkeit, mit der das Werkstück vermessen wird.

Soweit als Rahmenauflage ein Gestell verwendet wird, könnte der Messtisch aber auch integraler Bestandteil dieses Gestells sein. Beispielsweise könnte die Rahmenauflage und der Messtisch als Stahl-Schweißkonstruktion aufgeführt sein.

In einer Ausgestaltung lagert der erste Messschlitten einen zweiten Messschlitten horizontal entlang des ersten Messschlittens in einer zweiten horizontalen Koordinatenrichtung (y) beweglich, wobei dieser zweite Messschlitten wiederum in einer dritten, vertikalen Koordinatenrichtung (z) einen dritten Messschlitten beweglich lagert, an dessen unterem Ende der Sensor befestigt ist. Hierdurch kann dann der Sensor in allen drei Koordinatenrichtungen (x, y und z) verfahren werden.

Die Bauelemente des steifen Rahmens können vielfältig variieren. Beispielsweise können die vertikalen Stützen und/oder die horizontalen Längsträger und/oder die Querträger aus Granit hergestellt sein, oder aus Guss hergestellt sein oder als steifes Fachwerk hergestellt sein, bei dem, ähnlich wie bei einem Hochspannungsmasten, Metallprofile zu einem steifen Bauelement verschraubt oder verschweißt sind.

Besonders einfach können die horizontalen Längsträger und/oder die vertikalen Stützen und/oder die Querträger jedoch als Hohlprofil ausgebildet sein. Ein solches Hohlprofil lässt sich einfach aus zwei der Länge nach verschweißten U-förmigen Hälften herstellen. Die U-förmigen Hälften können beispielsweise durch gebogene Stahlbleche gebildet werden.

Die steife Verbindung zwischen den vertikalen Stützen und den Querträgern und/oder die steife Verbindung zwischen den vertikalen Stützen und den horizontalen Längsträgern ist vorteilhaft eine Verschraubung oder eine Verschweißung.

Hinsichtlich des Aufbaus des Koordinatenmessgerätes ist es insbesondere bei großen Koordinatenmessgeräten sinnvoll die Querträger in einer oder mehreren Aussparungen im Boden anzuordnen. Hierdurch kann dann nämlich ein bodenebenes Koordinatenmessgerät realisiert werden, das von allen Seiten begehbar oder befahrbar ist. Um dies zu realisieren, können im einfachsten Fall gezielt für die Querträger quaderförmige Aussparungen im Boden vorgesehen sein, in denen die Querträger angeordnet sind. Als Werkstückauflage und gleichzeitig als Rahmenauflage dient dann der Boden selbst. Im Bereich der Querträger sollten die Aussparungen mit entsprechenden Platten abgedeckt sein. Alternativ kann aber auch eine große Aussparung im Boden vorgesehen sein, in der dann die Rahmenauflage (beispielsweise ein Fundament oder ein Gestell) nebst den hierauf gelagerten Querträgern des steifen Rahmens und ein als Werkstückauflage dienender Werkstücktisch angeordnet werden. Der Werkstücktisch muss dann so ausgestaltet sein, dass dessen Oberseite in der gleichen Ebene wie der Boden liegt. Die Zwischenräume zwischen dem Werkstücktisch und den Rändern der Aussparung im Boden sollten mit Platten abgedeckt werden.

Weitere Details und Ausführungsformen können den nachfolgend näher beschriebenen Figuren entnommen werden. Hierin zeigen:
- Figur 1: den Aufbau eines erfindungsgemäßen Koordinatenmessgerätes
- Figur 2: perspektivische Ansicht der Mechanik 24 zum Verfahren des Sensors 8 aus dem in Figur 1 gezeigten Koordinatenmessgerät
- Figur 3: den Aufbau eines erfindungsgemäßen Koordinatenmessgerätes mit gegenüber Figur 1 verlängerten Längsträgern 1 a und 1b
- Figur 4: perspektivische Ansicht der Mechanik 24 zum Verfahren des Sensors 8 aus dem in Figur 3 gezeigten Koordinatenmessgerät mit verlängerten Längsträgern 1a und 1b
- Figur 5: perspektivische Detailansicht des in vertikaler Richtung steifen Auflagers 4c aus Figuren 1 bis 4, das in einer horizontalen Richtung linearbeweglich und gleichzeitig kippbar ist und in einer zweiten horizontalen Richtung nur kippbar ist.
- Figur 6: Vorderansicht des in Figur 5 gezeigten in vertikaler Richtung steifen Auflagers 4c
- Figur 7: Seitenansicht des in Figur 5 gezeigten in vertikaler Richtung steifen Auflagers 4c
- Figur 8: Seitenansicht des in vertikaler Richtung steifen Auflagers 4b aus Figuren 1 bis 4, das in zwei horizontalen Richtungen nur kippbar ist
- Figur 9: Seitenansicht des in vertikaler Richtung steifen Auflagers 4a aus Figuren 1 bis 4, das in zwei horizontalen Richtungen linearbeweglich und gleichzeitig kippbar ist.
- Figur 10: Schematische Darstellung der Lagerung des steifen Rahmens auf der Rahmenauflage (Fundament 10)
- Figur 11: Seitenansicht des in vertikaler Richtung federnden Auflagers 12a aus Figuren 3 und 4
- Figur 12: rein schematische Schnittdarstellung des steifen Rahmens 45 aus Figuren 1 und 2, bei dem die Querträger 3a und 3b in Aussparungen 27 und 28 im Boden 26 angeordnet sind
- Figur 13: rein schematische Seitenansicht eines steifen Rahmens 45 aus Figuren 1 und 2, bei dem die Rahmenauflage, anders als in Figur 1 ein Gestell 23 ist, auf dem ein Messtisch 25 direkt gelagert ist
- Figur 14: rein schematische Darstellung der Stütze 2a aus Figur 1 in der Draufsicht
- Figur 15: rein schematische Darstellung der Verbindung zwischen der vertikalen Stütze 2a und dem Längsträger 1a und dem Querträger 3a aus Figur 1.

Figur 1 zeigt rein beispielhaft ein Koordinatenmessgerät, in dem die Erfindung realisiert ist. Figur 2 zeigt hierbei einen Teil der in Figur 1 zu sehenden Komponenten, nämlich die noch weiter unten im Detail beschriebene Mechanik 24 nebst dem hieran befestigten Sensor 8 in einer perspektivischen Ansicht von seitlich unten.

Ein erfindungsgemäßes Koordinatenmessgerät wird nun unter Rückgriff auf Figuren 1 und 2 näher erläutert, wobei die in den Ansprüchen verwendeten Bezeichnungen, soweit erforderlich, in Klammern hinter die Ausdrücke gesetzt werden. Zur Vermessung eines Werkstückes 25, das hier auf einem Werkstücktisch 9 gelagert ist, kann ein Sensor 8 durch eine Mechanik 24 relativ zum Werkstück 25 in den drei senkrecht aufeinander stehenden Koordinatenrichtungen x, y und z verfahren werden. Die Koordinatenrichtungen sind hierbei jeweils durch Pfeile x, y und z dargestellt. Der Sensor 8 kann hierbei beispielsweise taktil oder optisch ausgestaltet sein. Als taktiler Sensor kann beispielsweise ein sogenannter schaltender Sensor verwendet werden, der bei Berührung eines Werkstückes 25 mit seinem Antastformkörper ein Signal erzeugt oder ein messender Sensor, dessen Antastformkörper bei Berührung des Werkstückes 25 in den drei Koordinatenrichtungen x, y und z ausgelenkt werden kann und diese Auslenkung durch Messsysteme erfasst und bei der Messung berücksichtigt wird. Als optischer Sensor kann beispielsweise eine Digitalkamera verwendet werden oder ein Lasertriangulationssensor.

Der Sensor 8 ist an einer Pinole 7 (dritter Messschlitten) befestigt, die an einem entsprechenden Kreuzschlitten 6 (zweiter Messschlitten) in der mit dem Pfeil z bezeichneten vertikalen Richtung beweglich gelagert ist. Über einen nicht näher zu sehenden Maßstab wird die vertikale Position der Pinole 7 (dritter Messschlitten) ermittelt. Über einen ebenfalls nicht zu sehenden Antrieb kann die Pinole 7 (dritter Messschlitten) in vertikaler z-Richtung verfahren werden. Der Kreuzschlitten 6 (zweiter Messschlitten) wiederum ist auf einem Brückenschlitten 5 (erster Messschlitten) in der mit dem Pfeil y bezeichneten horizontalen Richtung verfahrbar, die senkrecht auf die z-Richtung steht. Auch hierfür ist ein Maßstab zur Bestimmung der Position des Kreuzschlittens 6 (zweiter Messschlitten) in der mit dem Pfeil y bezeichneten Richtung vorgesehen sowie ein Antrieb, über den der Kreuzschlitten 6 (zweiter Messschlitten) angetrieben werden kann. Der Brückenschlitten 5 (erster Messschlitten) wiederum ist auf zwei parallelen, horizontal ausgerichteten Führungen 26a und 26b (erste horizontale Führung 26a und zweite horizontale Führung 26b) in der mit dem Pfeil x bezeichneten Koordinatenrichtung beweglich gelagert. Die Führung 26a (erste horizontale Führung) ist Bestandteil eines horizontalen Längsträgers 1a (erster horizontaler Längsträger) und die Führung 26b (zweite horizontale Führung) ist Bestandteil eines horizontalen Längsträgers 1b (zweiter horizontaler Längsträger). Dazu wurden hier die Führungen als Luftlagerführungen ausgebildet, wobei die Führungsflächen der Führungen 26a und 26b hier direkt in die Längsträger 1a und 1b eingearbeitet sind und auf denen am Brückenschlitten 5 befestigte Luftlager beweglich geführt sind. Natürlich sind auch andere Führungen möglich, wie beispielsweise Linearführungen, bei denen Kugelumlaufschuhe auf Schienen geführt sind.

Auch für den Brückenschlitten 5 (erster Messschlitten) ist ein nicht näher gezeigter Maßstab vorgesehen, mit dem die Position des Brückenschlittens 5 in der mit dem Pfeil x bezeichneten Richtung bestimmt werden kann und ein ebenfalls nicht zu sehender Antrieb, mit dem der Brückenschlitten 5 verfahren werden kann.

Bei der Messung des Werkstückes 25 beispielsweise mit einem taktilen Sensor 8 wird bei der Berührung des Werkstückes 25 mit dem Sensor 8 ein Signal erzeugt, über das der Maßstabswert des Maßstabes der Pinole 7 in der z-Richtung, des Maßstabes des Kreuzschlittens 6 in der y-Richtung und des Brückenschlittens 5 in der x-Richtung ausgelesen wird. Aus diesen Massstabswerten wird dann der Punkt der Berührung auf dem Werkstück 25 ermittelt.

Zum Ansteuern der Antriebe für den Brückenschlitten 5, für den Kreuzschlitten 6 und für die Pinole 7, sowie zum Auslesen der entsprechenden Maßstabswerte der jeweiligen Maßstäbe und zur Auswertung der Signale des Sensors 8 ist eine hier nicht dargestellte Steuerung vorgesehen. Diese Steuerung wiederum ist mit einem ebenfalls nicht zu sehenden Messrechner verbunden, über den der Bediener des Koordinatenmessgerätes Messabläufe eingeben und verändern kann, sowie die Messergebnisse auswerten kann.

Die besagte Mechanik 24, die auch in einer perspektivischen Ansicht von seitlich unten in Figur 2 zu sehen ist, dient zum Verfahren des Sensors 8 relativ zum Werkstück 25 in einer oder mehreren Koordinatenrichtungen (x, y, z). Diese Mechanik 24 umfasst hierbei einen steifen Rahmen 45 (Das Berugsieichen. 45 wurde der Übersichtlichkeit halber nicht in Figur 1 sondern nur in Figur 2 verwendet). Dieser steife Rahmen 45 weist den ersten horizontalen Längsträger 1a mit der ersten horizontalen Führung 26a auf, sowie eine erste vertikale Stütze 2a und eine zweite vertikale Stütze 2c auf, wobei mit dem oberen Ende der ersten Stütze 2a und mit dem oberen Ende der zweiten vertikalen Stütze 2c der erste horizontale Längsträger 1a steif verbunden ist.

Ferner weist der steife Rahmen 45 den zweiten horizontalen Längsträger 1b mit der zweiten horizontalen Führung 26b auf, die parallel und beabstandet zur ersten horizontalen Führung ausgerichtet ist, sowie eine dritte vertikale Stütze 2b und eine vierte vertikale Stütze 2d, wobei mit dem oberen Ende der dritten Stütze 2b und mit dem oberen Ende der vierten vertikalen Stütze 2d der zweite horizontale Längsträger 1b steif verbunden ist.

Außerdem weist der steife Rahmen 45 zusätzlich einen ersten Querträger 3a auf, der quer zur Längsrichtung des ersten Längsträgers 1a und des zweiten Längsträgers 1b ausgerichtet ist und mit dem das untere Ende der ersten Stütze 2a und das untere Ende der dritten Stütze 2b steif verbunden ist und einen zweiten Querträger 3b auf, der quer zur Längsrichtung des ersten Längsträgers 1a und des zweiten Längsträgers 1b ausgerichtet ist und mit dem das untere Ende der zweiten Stütze 2c und das untere Ende der vierten Stütze 2d steif verbunden ist. Hierdurch entsteht der besagte steife Rahmen 45, der besonders gut in Figur 2 zu sehen ist.

Die Mechanik 24 weist neben dem steifen Rahmen 45 zusätzlich drei in vertikaler Richtung steife Auflager 4a, 4b und 4c (das Auflager 4c ist nur in Figur 2 zu sehen und in Figur 1 verdeckt) auf. Der erste Querträger 3a des steifen Rahmens 45 ist auf einem ersten in vertikaler Richtung steifen Auflager 4a gelagert. Der zweite Querträger 3b des steifen Rahmens 45 ist auf dem zweiten in vertikaler Richtung steifen Auflager 4b und auf dem dritten in vertikaler Richtung steifen Auflager 4c gelagert. Die in vertikaler Richtung steifen Auflager 4a, 4b und 4c liegen wiederum auf einem Fundament 10 auf (siehe Figur 1), das somit als Rahmenauflage dient. Dieses Fundament 10 wiederum wird in dem hier gezeigten Ausführungsbeispiel in einer entsprechenden Aussparung im Boden angeordnet und wird hier über in vertikaler Richtung federnde und gleichzeitig auch schwingungsdämpfende Auflager 27a, 27b, 27c und 27d (das Auflager 27d ist in Figur 1 nicht zu sehen) auf der Bodenfläche der Aussparung gelagert. Es handelt sich hierbei bei den Auflagern 27a bis 27d um Platten, die aus Gummi und Kork hergestellt sind. Damit ist in diesem Ausführungsbeispiel die Rahmenauflage (also das Fundament 10) federnd und schwingungsgedämpft auf dem Boden gelagert.

Außerdem ist Bestandteil der Mechanik 24 zumindest auch der bereits beschriebene Brückenschlitten 5 (erster Messschlitten) zum Verfahren des Sensors 8 in einer ersten horizontalen Koordinatenrichtung der entlang der ersten horizontalen Führung 26a und der zweiten horizontalen Führung 26b geführt ist. Außerdem ist gegebenenfalls auch der horizontal entlang des Brückenschlittens 5 (erster Messschlitten) in einer zweiten horizontalen Koordinatenrichtung y beweglich gelagerte Kreuzschlitten 6 (zweiter Messschlitten) und die von diesem Kreuzschlitten 6 (zweiter Messschlitten) in einer dritten, vertikalen Koordinatenrichtung z beweglich gelagerte Pinole 7 (dritter Messschlitten), an deren unterem Ende dann der Sensor 8 befestigt ist, Bestandteil der Mechanik 24.

Das Werkstück 25 hingegen ist auf einer Werkstückauflage gelagert, die hier beispielhaft als Werkstücktisch 9 ausgeführt ist (siehe Figur 1). Der Werkstücktisch 9 ist hier rein beispielhaft über vier in den Ecken angebrachte Auflager 11a, 11b, 11c und 11d auf dem Fundament 10 gelagert, das, wie im vorherigen Absatz beschrieben, auch als Rahmenauflage für den steifen Rahmen 45 dient. Aufgrund der Perspektive ist hier nur das Auflager 11a zu sehen. Alle vier Auflager 11a, 11b, 11c und 11d sind in dem hier gezeigten Ausführungsbeispiel in vertikaler Richtung steif. Wie bereits oben erwähnt, können anstelle dessen beispielsweise aber auch nur drei in vertikaler Richtung steife Auflager verwendet werden oder drei in vertikaler Richtung steife Auflager gemeinsam mit einem vierten, in vertikaler Richtung federnden Auflager verwendet werden.

Die Werkstückauflage, hier also der Werkstücktisch 9 mit den Auflagern 11a, 11b, 11c und 11d ist hierdurch also so ausgeführt, dass die Gewichtskraft des Werkstückes 25 direkt in das Fundament 10 (die Rahmenauflage) eingeleitet wird, so dass diese Werkstückauflage somit also so ausgeführt ist, dass der Kraftfluss der Gewichtskräfte des Werkstückes direkt in die Rahmenauflage eingeführt ist. Damit wird die Gewichtskraft des Werkstückes insbesondere nicht von Bauteilen des steifen Rahmens 45 aufgenommen.

Durch die beschriebene Anordnung ergibt sich folgende Besonderheit. Dadurch, dass die Mechanik 24 zum Verfahren des Sensors 8 relativ zum Werkstück 25 einen steifen Rahmen 45 umfasst, der über eine Dreipunktlagerung mit in vertikaler Richtung steifen Auflagern 4a, 4b und 4c auf dem Fundament 10 (der Rahmenauflage) gelagert ist, kann sichergestellt werden, dass weder Verformungen des Bodens, auf dem die Rahmenauflage (hier das Fundament 10) gelagert ist noch Verformungen der Rahmenauflage selbst zu Verformungen der Mechanik 24 führen.

Nachdem die Werkstückauflage den Kraftfluss der Gewichtskräfte des Werkstückes direkt in die Rahmenauflage (also hier das Fundament 10) einführt und somit die Gewichtskraft des Werkstückes direkt in den Boden einleitet, kann das Werkstückgewicht selber höchstens das Fundament 10 (die Rahmenauflage) und/oder den Boden verformen, nicht aber den steifen Rahmen 45 der Mechanik 24 verformen.

Dies führt dazu, dass Verformungen der Rahmenauflage (hier also des Fundamentes 10) aufgrund eines hohen Werkstückgewichtes lediglich die Lage der Mechanik 24 relativ zum Werkstück 25 ändern. Die Mechanik 24 wird hierdurch jedoch nicht verformt, so dass es hierdurch zu keinen Messfehlern kommt.

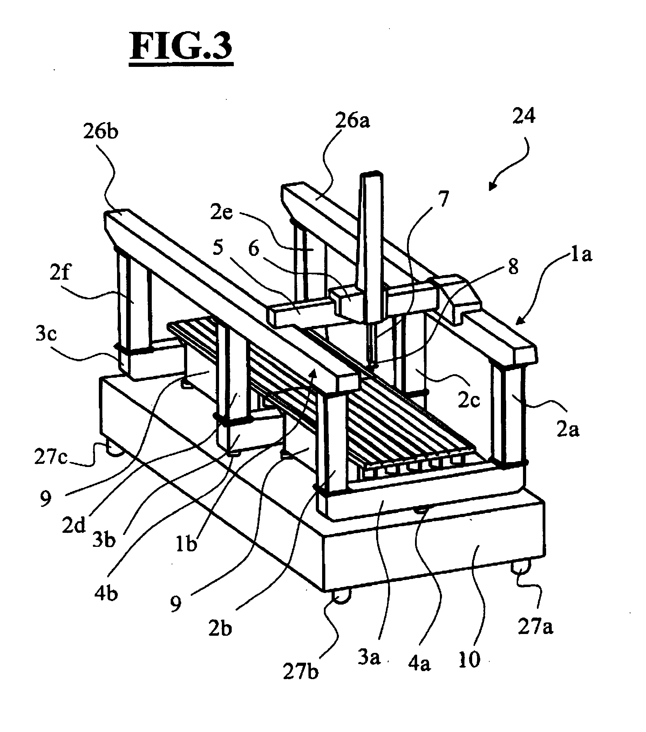

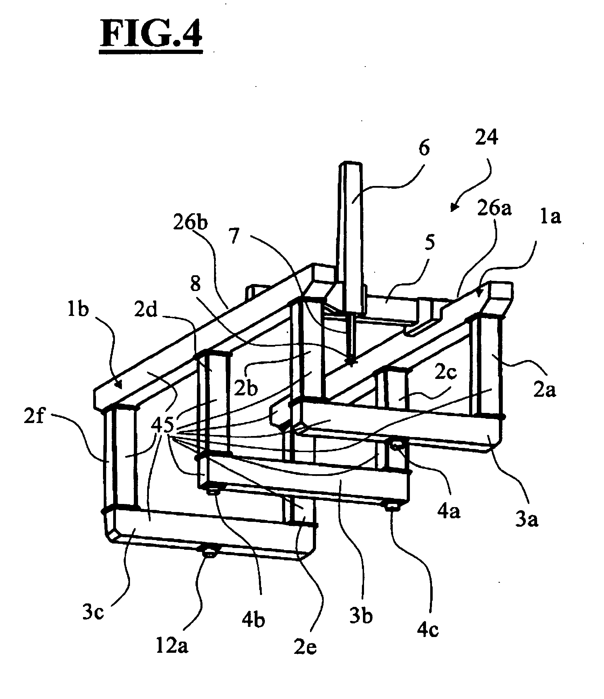

Figur 3 zeigt rein beispielhaft ein anderes Koordinatenmessgerät, in dem die Erfindung realisiert ist. Figur 4 zeigt hierbei einen Teil der in Figur 3 zu sehenden Komponenten, nämlich die noch weiter unten im Detail beschriebene Mechanik 24 mit dem hieran befestigten Sensor 8 in einer perspektivischen Ansicht von seitlich unten.

Dieses Koordinatenmessgerät wird nunmehr unter Rückgriff auf die Figuren 3 und 4 näher erläutert. Dieses Koordinatenmessgerät ist relativ ähnlich zu dem Koordinatenmessgerät gemäß Figuren 1 und 2 aufgebaut, wobei gleiche Komponenten (gegebenenfalls etwas unterschiedlich dimensioniert) mit den gleichen Bezugszeichen wie in Figuren 1 und 2 bezeichnet werden. Der wesentliche Unterschied dieses Koordinatenmessgerätes ist darin zu sehen, dass die horizontalen Längsträger 1a und 1b und mithin auch die horizontalen Führungen 26a und 26b länger als bei dem Koordinatenmessgerät nach Figuren 1 und 2 sind, so dass sowohl der erste Längsträger 1a auf einer weiteren Stütze 2e (fünfte vertikale Stütze), als auch der zweite Längsträger 1b auf einer weiteren Stütze 2f (sechste vertikale Stütze) gelagert sind und die Stützen 2e und 2f auf einem zusätzlichen Querträger 3c (dritter Querträger) gelagert sind. Das obere Ende der fünften vertikale Stütze 2e ist hierbei wieder mit dem ersten horizontalen Längsträger 1a steif verbunden, während das obere Ende der sechsten vertikalen Stütze 2f mit dem zweiten horizontalen Längsträger 1b steif verbunden ist. Der dritte Querträger 3c, der hier natürlich wieder quer zur Längsrichtung des ersten Längsträgers 1a und des zweiten Längsträgers 1b ausgerichtet ist, ist mit dem unteren Ende der fünften vertikalen Stütze 2e und mit dem unteren Ende der sechsten vertikalen Stütze 2f steif verbunden. Das Bezugszeichen 45 für den steifen Rahmen, der in diesem Ausführungsbeispiel zusätzlich die fünfte vertikale Stütze 2e, die sechste vertikale Stütze 2f und den dritten. Querträger 3c umfasst wurde aus Gründen der Übersichtlichkeit nur in Figur 4 angebracht.

Die Lagerung der Mechanik weist hier außerdem wenigstens ein in vertikaler Richtung federndes Auflager 12a auf (nur in Figur 4 zu sehen), über das der dritte Querträger 3c gelagert ist. Dieses in vertikaler Richtung federnde Auflager 12a ist, wie aus Figur 3 ersichtlich, ebenfalls auf der Rahmenauflage (also hier dem Fundament 10) gelagert.

Die Lagerung über ein federndes Auflager 12a hat folgenden Hintergrund. Anders als die in vertikaler Richtung steifen Auflager 4a, 4b und 4c muss jedes weitere Auflager federnd ausgebildet sein. Ansonsten hätte eine Auf- oder Abbewegung der Rahmenauflage (hier das Fundament 10) zur Folge, dass die Kraft, die auf die jeweiligen Auflager wirkt nicht mehr weitgehend konstant bleibt. Bei einer der Abbewegung der Rahmenauflage (Fundament 10) im Bereich eines Auflagers beispielsweise könnte dann dieses Auflager in der Luft hängen und gar keine Kraft mehr aufnehmen. Dies würde dann aber zu einer Verbiegung des steifen Rahmens 45 der Mechanik 24 führen und damit Messfehler verursachen, was ja genau vermieden werden soll. Dadurch, dass das Auflager 12a federnd ausgestaltet ist, bleibt die Kraft, die von den Auflagern aufgenommen wird, weitgehend konstant.

Anders als im Ausführungsbeispiel nach Figuren 1 und 2 sind im Ausführungsbeispiel nach Figuren 3 und 4 zwei Messtische 9 vorgesehen, die jeweils genauso wie der Messtisch 9 aus Figur 1 ausgeführt sind.

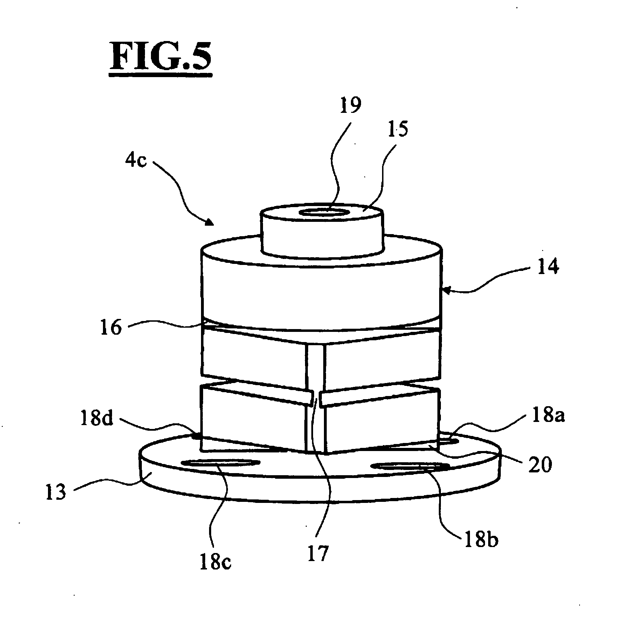

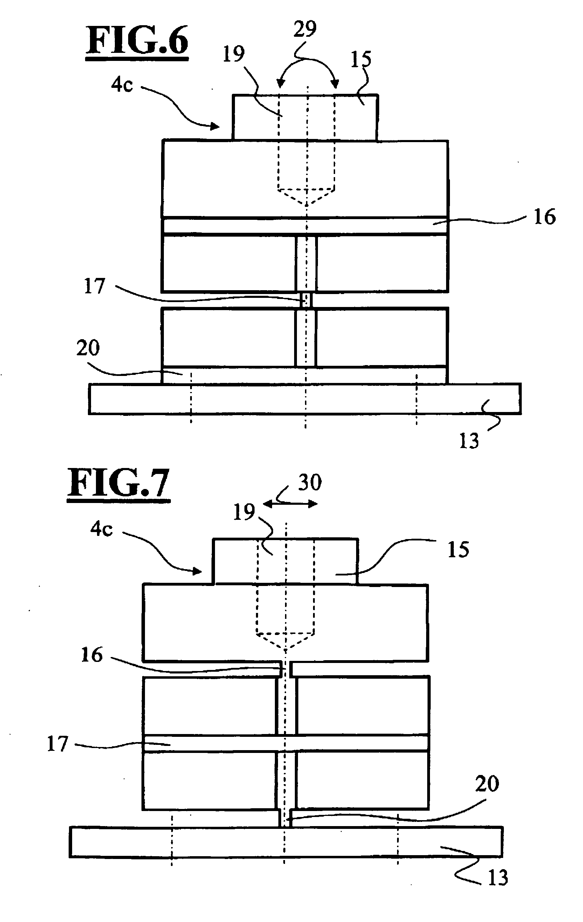

In Figuren 5 bis 7 ist das in vertikaler Richtung steife Auflager 4c aus Figuren 1, 2, 3 und 4 zu sehen. Figur 5 zeigt eine perspektivische Ansicht des Auflagers 4c, während Figur 6 die Vorderansicht zeigt, und Figur 7 die Seitenansicht zeigt. Das Auflager weist eine Bodenplatte 13 mit vier Langlöchern 18a, 18b, 18c und 18d auf, die über Schrauben an der Rahmenauflage (also im Falle von Figuren 1 bis 4 am Fundament 10) befestigt werden kann. Die Verschraubung an der Rahmenauflage hat insbesondere den Effekt, dass hierdurch der steife Rahmen 45 der Mechanik 24 in horizontaler Richtung nicht verrutschen kann. Außerdem wird hierdurch sichergestellt, dass der steife Rahmen 45 der Mechanik 24 nicht kippen kann. Diese Gefahr könnte beispielsweise bestehen, weil der steife Rahmen 45 im Ausführungsbeispiel nach Figuren 1 und 2 nur über ein Dreipunktlager auf der Rahmenauflage (Fundament 10) gelagert ist und beispielsweise der in Figur 1 zu sehende erste Querträger 3a nur über das mittig angeordnete Auflager 4a gelagert ist. Bei Gewichtskräften im vorderen linken Bereich oder im vorderen rechten Bereich des steifen Rahmens 45 aus Figur 1 beispielsweise infolge von ungünstiger Verstellung der Messschlitten 5 und 6 könnte der steife Rahmen 45 dann über das Auflager 4a kippen.

Das in Figuren 5 bis 7 gezeigte Auflager weist außerdem noch einen Abschlusssteg 15 mit Gewindebohrung 19 auf, an dem der zweite Querträger 3b über eine Schraube befestigt werden kann.

Die Besonderheit dieses Auflagers 4c im Vergleich zu den ebenfalls in vertikaler Richtung steifen Auflagern 4a und 4b ist darin zu sehen, dass dieses Auflager in einer horizontalen Richtungen linearbeweglich und auch kippbar ist und in einer zweiten horizontalen Richtung nur kippbar ist. Dazu weist das Auflager 4c, das hierbei monolithisch aus einem Materialblock gefertigt ist materialgeschwächte Bereiche 16, 17 und 20 auf, die wie Blattfedern wirken. Der materialgeschwächte Bereich 17 erlaubt, wie aus Figur 6 ersichtlich, eine Kippung in einer ersten horizontalen Richtung. Dies ist auch durch den Pfeil 29 angedeutet. Die materialgeschwächten Bereiche 16 und 20 erlauben, wie man dies aus Figur 7 gut erkennen kann, eine Linearbewegung und gleichzeitig eine Kippung in einer zweiten horizontalen Richtung, die senkrecht zur ersten horizontalen Richtung steht. Dies ist durch einen Pfeil 30 angedeutet.

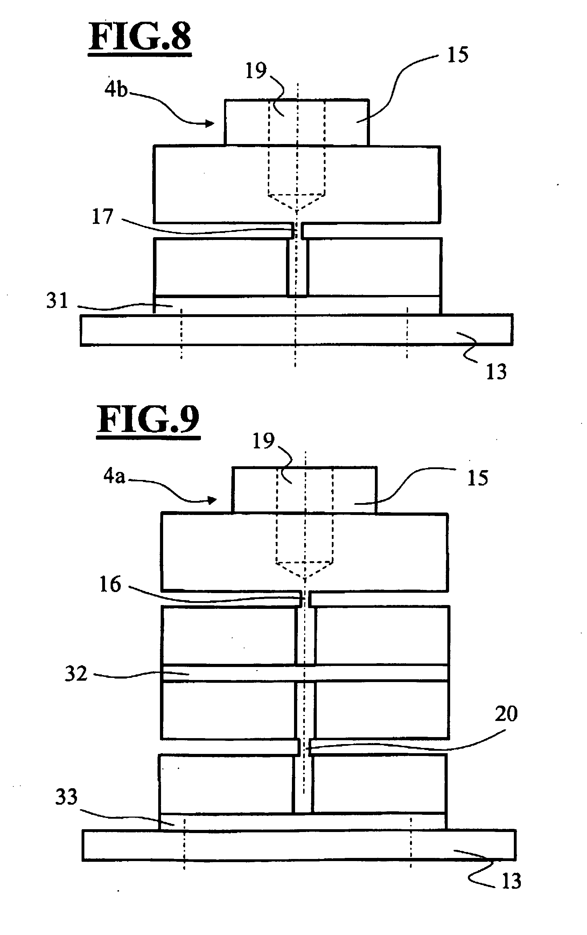

Das in Figuren 1 bis 4 zu sehende in vertikaler Richtung steife Auflager 4b ist in einer Seitenansicht in Figur 8 zu sehen. Gleiche Teile wie beim Auflager 4c nach Figuren 5 bis 7 wurden hierbei mit gleichen Bezugszeichen bezeichnet. Wie aus Figur 8 zu sehen, weist dieses Auflager 4b einen materialgeschwächten Bereich 17 auf, der nur eine Kippung in einer ersten horizontalen Richtung erlaubt und einen materialgeschwächten Bereich 31 auf, der nur eine Kippung in einer zweiten horizontalen Richtung erlaubt, die senkrecht zur ersten horizontalen Richtung steht.

Das in Figuren 1 bis 4 zu sehende in vertikaler Richtung steife Auflager 4a ist in einer Seitenansicht in Figur 9 zu sehen. Gleiche Teile wie beim Auflager 4c nach Figuren 5 bis 7 wurden hierbei mit gleichen Bezugszeichen bezeichnet. Wie aus Figur 9 zu sehen, weist dieses Auflager 4a zum einen zwei materialgeschwächte Bereich 16 und 20 auf, über die eine Linearbewegung und auch eine Kippung in einer ersten horizontalen Richtung ermöglicht wird und zwei materialgeschwächte Bereiche 32 und 33 auf, über die eine Linearbewegung und eine Kippung in einer zweiten horizontalen Richtung ermöglicht wird, die senkrecht zur ersten horizontalen Richtung steht.

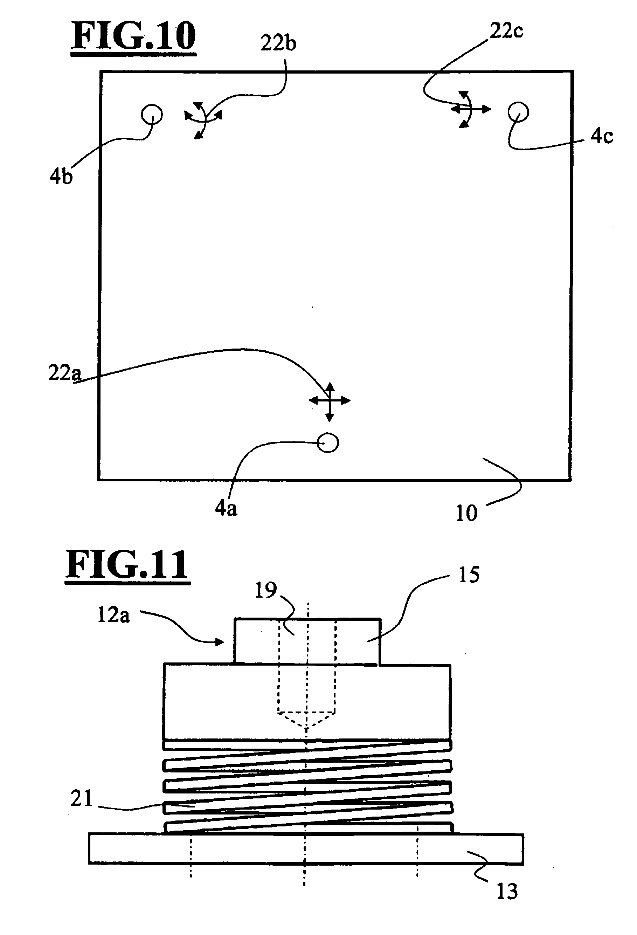

Der Effekt dieser drei in vertikaler Richtung steifen Auflager 4a bis 4c wird nun anhand von Figur 10 erläutert. Hierin ist die Rahmenauflage (also im Falle von Figuren 1 bis 4 das Fundament 10) von oben zu sehen, auf dem schematisch die drei in vertikaler Richtung steifen Auflager 4a bis 4c zu sehen sind. Die Pfeile 22a bis 22c sollen hierbei die Beweglichkeit der drei Auflager 4a bis 4c symbolisieren, wobei gekrümmte Pfeile jeweils nur eine Kippung in der betreffenden horizontalen Richtung symbolisieren sollen und die geraden Pfeile sowohl eine Linearbeweglichkeit als auch eine Kippung in der jeweiligen horizontalen Richtung symbolisieren sollen. Durch die Linearbeweglichkeit des Auflagers 4c in der durch den entsprechenden Pfeil 22c gezeigten Richtung und durch die Linearbeweglichkeit des Auflagers 4a in den beiden durch den Pfeil 22a gezeigten horizontalen Richtungen kann erreicht werden, dass thermisch bedingte Längenänderungen des oben ausführlich beschriebenen steifen Rahmens 45, also beispielsweise Längenänderungen des Längsträgers 1b (siehe Figuren 1 bis 4) oder thermisch bedingte Längenänderungen der Rahmenauflage (also im Falle von Figuren 1 bis 4 das Fundament 10) ausgeglichen werden können. Neben den thermischen Längenänderungen der Rahmenauflage (Fundament 10) oder des steifen Rahmens 45 sind aber auch Hebungen oder Senkungen der Rahmenauflage möglich. Um diese auszugleichen ist jedes der Auflager 4a bis 4c in zwei horizontalen Richtungen kippbar. Soweit eines der Auflager 4a bis 4c bereits in einer horizontalen Richtung linearbeweglich ist, ist diese Kippbarkeit in der betreffenden Richtung ohnehin gegeben. Soweit ein Lager in einer horizontalen Richtung hingegen nicht linearbeweglich sein soll, kann diese Kippbarkeit in dieser Richtung durch nur eine einzelne Materialschwächung erreicht werden, wie dies im Zusammenhang mit den Auflagern 4c und 4b in Figuren 5 bis 8 beschrieben ist.

Figur 11 zeigt das in vertikaler Richtung federnde Auflager 12a aus dem Ausführungsbeispiel nach Figuren 3 und 4. Gleiche Bauteile wie das Auflager aus Figuren 5 bis 7 werden hierin auch mit gleichen Bezugszeichen versehen. Die Besonderheit dieses Auflagers 12a ist hierbei eine sehr weiche, vorgespannte Spiralfeder 21. Über dieses spezielle in vertikaler Richtung federnde Auflager 12a kann nun besonders geeignet der dritte Querträger 3c aus Figuren 3 und 4 auf der Rahmenauflage (Fundament 10) gelagert werden. Aufgrund der Spiralfeder 21 ist das Auflager in zwei horizontalen Richtungen linearbeweglich und kippbar und kann somit, wie oben bereits beschrieben thermische Längenänderungen des steifen Rahmens 45 oder der Rahmenauflage (Fundament 10) oder auch Hebe- und Senkbewegungen der Rahmenauflage ausgleichen.

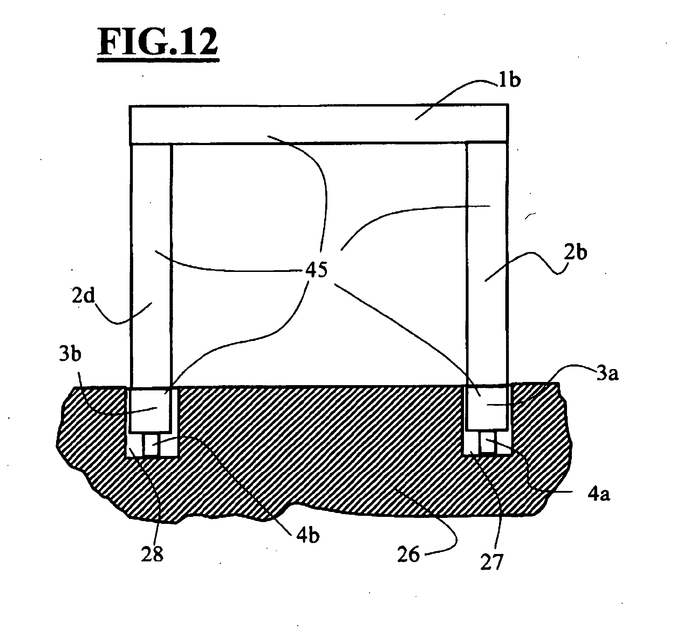

Figur 12 zeigt rein schematisch den in Figuren 1 und 2 zu sehenden steifen Rahmen 45 der Mechanik 24, der hier bodeneben gelagert ist. Gleiche Bauteile wie aus Figuren 1 und 2 wurden hierbei mit gleichen Bezugszeichen bezeichnet. Wie aus Figur 12 zu sehen, ist der Rahmen 45 in diesem Falle nicht auf einem Fundament 10 gelagert, sondern direkt auf dem Boden 26. Der Boden 26 umfasst in diesem Falle Aussparungen 27 und 28, in denen die Querträger 3a und 3b über die drei in vertikaler Richtung steifen Auflager 4a, 4b und 4c (Auflager 4c ist hier nicht zu sehen) gelagert sind. Um dies zu sehen ist in Figur 12 der Boden 26 nur abschnittsweise dargestellt und so geschnitten, dass die Aussparungen 27 und 28 sichtbar werden.

Damit dient im Falle von Figur 12 der Boden 26 direkt als Rahmenauflage. Gleichzeitig dient der Boden 26 im Bereich des steifen Rahmens 45 auch als Werkstückauflage, auf der ein zu vermessendes Werkstück gelagert werden kann, so dass dann der Kraftfluss der Gewichtskräfte des Werkstückes direkt in die Rahmenauflage (also auch der Boden 26) eingeführt ist.

Durch die Tatsache, dass die Querträger 3a und 3b im Boden versenkt sind, entsteht außerdem eine bodenebenes Messgerät. Deckt man die versenkten Bereiche der Querträger 3a und 3b mit Platten ab, so kann die Werkstückauflage von allen vier Seiten ohne Hindernisse vom Bediener des Koordinatenmessgerätes begangen werden oder auch befahren werden.

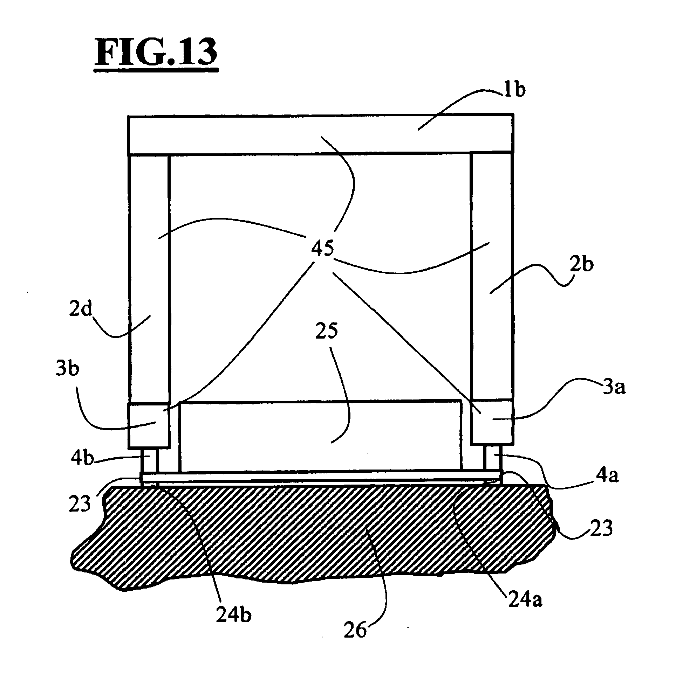

Figur 13 zeigt rein schematisch den in Figuren 1 und 2 zu sehenden steifen Rahmen 45 der Mechanik 24 in einer geänderten Ausführung. Der steife Rahmen 45 ist hier auf einer Rahmenauflage gelagert, die als Gestell 23 ausgebildet ist. Gleiche Bauteile wie der steife Rahmen 45 aus Figuren 1 und 2 wurden hierbei mit gleichen Bezugszeichen bezeichnet. Wie aus Figur 13 zu sehen, ist der steife Rahmen in diesem Falle über die in vertikaler Richtung steifen Auflager 4a, 4b und 4c (Auflager 4c ist in Figur 13 nicht zu sehen) auf einer Rahmenauflage gelagert, die in diesem Ausführungsbeispiel als Gestell 23 ausgeführt ist. Dieses Gestell ist hier aus geschweißtem Stahl hergestellt. Auf dieser Rahmenauflage (Gestell 23) wiederum ist eine Werkstückauflage in Form eines Messtisches 25 angeordnet. Hierdurch ist wiederum sichergestellt, dass der Kraftfluss der Gewichtskräfte des Werkstückes direkt in die Rahmenauflage (Gestell 23) eingeführt ist. Die Rahmenauflage, also hier das Gestell 23, wiederum ist über drei in vertikaler Richtung federnde Auflager 24a, 24b und 24c (das Auflager 24c ist in Figur 13 nicht zu sehen) auf dem hier nur ausschnittsweise dargestellten, im Schnitt gezeigten Boden 26 gelagert.

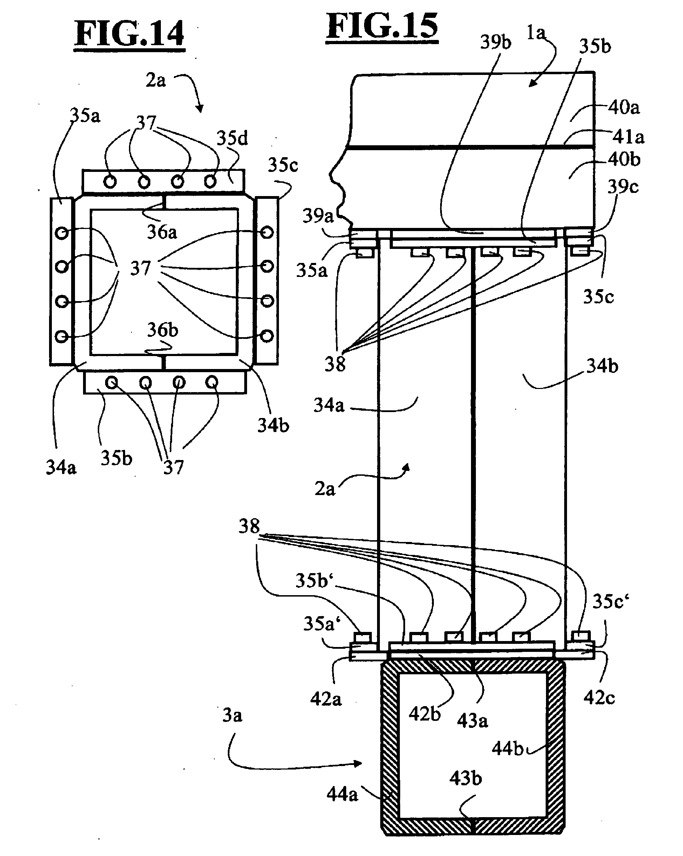

Figur 14 zeigt rein schematisch die Ausführung der in Figuren 1 bis 4 zu sehenden Stütze 2a (erste vertikale Stütze) von oben. Wie hieraus ersichtlich ist, ist die Stütze 2a aus zwei U-förmig gebogenen Stahlblechen 34a und 34b hergestellt, die über ihre gesamte Länge mit zwei Schweißnähten 36a und 36b verschweißt sind. Am oberen Ende sind vier Platten 35a, 35b, 35c und 35d angeschweißt, wobei jede dieser Platten eine Vielzahl von Bohrungen 37 aufweist. Am unteren Ende der Stütze 2a sind die gleichen vier Platten mit Bohrungen angeschweißt, wobei diese Platten nur in Figur 15 zu sehen sind und zur Unterscheidung von den am oberen Ende angeschweißten Platten durch die Bezugszeichen 35a', 35b', 35c' und 35d' bezeichnet sind.

Wie die in Figur 14 gezeigte Stütze 2a nunmehr steif mit dem horizontalen Längsträger 1a und mit dem Querträger 3a verbunden ist, ist aus Figur 15 zu sehen. Figur 15 zeigt hierbei eine rein schematische Darstellung eines Schnittes des in Figur 1 dargestellten steifen Rahmens 45 entlang der Linie A-A (siehe Figur 1). Wie aus dieser Schnittdarstellung zu sehen ist, ist mit dem oberen Ende dieser Stütze 2a (erste vertikale Stütze) der Längsträger 1 a (erster horizontaler Längsträger) steif verbunden und mit dem unteren Ende der Querträger 3a (erster Querträger) steif verbunden. Wie aus der Bruchkante am linken Rand des horizontalen Längsträgers 1a zu sehen, ist nur ein kleiner Teil des Längsträgers 1a dargestellt.

Wie aus Figur 15 zu sehen ist, ist auch der horizontale Längsträger 1a als Hohlprofil ausgestaltet, das analog zur Stütze 2a, wie im Zusammenhang mit Figur 14 beschrieben, aus zwei zusammengeschweißten U-förmigen Stahlblechen 40a und 40b zusammengeschweißt ist. Von den beiden Schweißnähten ist hier nur die eine Schweißnaht 41 a zu sehen. Auf der Unterseite des zu sehenden Längsträgers 1a sind hierbei entsprechend den Platten 35a bis 35d der Stütze 2a vier Platten 39a bis 39d (Platte 39d ist hier nicht zu sehen) angeschweißt. Anders als die Platten 35a bis 35d der Stütze 2a sind hierin Gewindebohrungen vorgesehen, so dass die Stütze 2a mit dem horizontalen Längsträger 1a steif verbunden werden kann, indem durch die Bohrungen 37 der Platten 35a bis 35d der Stütze 2a Schrauben 38 eingeführt werden und in die Gewinde der Platten 39a bis 39d eingeschraubt werden. Hierdurch entsteht eine äußerst steife Verbindung zwischen der Stütze 2a und dem Längsträger 1a.

Genauso erfolgt auch die steife Verbindung der Stütze 2a an deren unteren Ende mit dem Querträger 3a. Auch der Querträger 3a ist als Hohlprofil ausgestaltet und aus zwei U-förmigen Stahlblechen 44a und 44b hergestellt, die über zwei Schweißnähte 43a und 43b über die gesamte Länge miteinander verschweißt sind. Auf der Oberseite des Querträgers 3a sind im Bereich der vier Platten 35a' bis 35d' der Stütze 2a vier Platten 42a bis 42d mit Gewindebohrungen angeschweißt (Platte 42d ist hier nicht zu sehen). Die Stütze 2a ist mit dem Querträger 3a steif verbunden, indem durch die Bohrungen 37 der Platten 35a' bis 35d' der Stütze 2a Schrauben 38 eingeführt werden und in die Gewinde der Platten 42a bis 42d eingeschraubt werden. Hierdurch entsteht auch eine äußerst steife Verbindung zwischen der Stütze 2a und dem Querträger 3a.

Die anderen Stützen 2b bis 2f gemäß Figuren 1 bis 4 sind hierbei völlig analog mit den Längsträgern 1a und 1b und den Querträgern 3a bis 3c steif verbunden.

## Patentansprüche

1. Koordinatenmessgerät zur Vermessung eines Werkstückes (25) umfassend
a) einen Sensor (8) zur Erfassung der Werkstückoberfläche des Werkstückes (25)
b) eine Mechanik (24) zum Verfahren des Sensors (8) relativ zum Werkstück (25) in einer oder mehreren Koordinatenrichtungen (x, y, z), wobei die Mechanik folgendes umfasst:
b-a) einen steifen Rahmen (45), der folgendes umfasst:
- einen ersten horizontalen Längsträger (1a) mit einer ersten horizontalen Führung (26a)
- einen zweiten horizontalen Längsträger (1b) mit einer zweiten horizontalen Führung (26b), die parallel und beabstandet zur ersten horizontalen Führung (26a) ausgerichtet ist
- wenigstens eine erste vertikale Stütze (2a) und eine zweite vertikale Stütze (2c), wobei mit dem oberen Ende der ersten vertikalen Stütze (2a) und mit dem oberen Ende der zweiten vertikalen Stütze (2c) der erste horizontale Längsträger (1a) steif verbunden ist
- wenigstens eine dritte vertikale Stütze (2b) und eine vierte vertikale Stütze (2d), wobei mit dem oberen Ende der dritten vertikalen Stütze (2b) und mit dem oberen Ende der vierten vertikalen Stütze (2d) der zweite horizontale Längsträger (1b) steif verbunden ist
- einen ersten Querträger (3a), der quer zur Längsrichtung des ersten Längsträgers (1a) und des zweiten Längsträgers (1b) ausgerichtet ist und mit dem das untere Ende der ersten Stütze (2a) und das untere Ende der dritten Stütze (2b) steif verbunden ist
- einen zweiten Querträger (3b), der quer zur Längsrichtung des ersten Längsträgers (1a) und des zweiten Längsträgers (1b) ausgerichtet ist und mit dem das untere Ende der zweiten Stütze (2c) und das untere Ende der vierten Stütze (2d) steif verbunden ist
b-b) eine Lagerung, über die der erste Querträger (3a) des Rahmens (45) und der zweite Querträger (3b) des Rahmens (45) gelagert ist
b-c) einen ersten Messschlitten (5) zum Verfahren des Sensors (8) in einer ersten horizontalen Koordinatenrichtung (x) der entlang der ersten horizontalen Führung (26a) und der zweiten horizontalen Führung (26b) geführt ist.

2. Koordinatenmessgerät nach Anspruch 1, wobei die Lagerung des Rahmens (45) drei oder mehr Auflager (4a-c, 12a) umfasst über die die Querträger (3a, 3b) auf einer Rahmenauflage (10, 23, 26) gelagert sind.

3. Koordinatenmessgerät nach Anspruch 2, wobei die Rahmenauflage (10, 23, 26) ein Fundament (10) oder ein Boden (26) oder ein Gestell (23) ist.

4. Koordinatenmessgerät nach einem der Ansprüche 2 bis 3, wobei von den Auflagern genau drei Auflager (4a-c) in vertikaler Richtung steif sind und wobei der erste Querträger (3a) des Rahmens (45) auf einem ersten Auflager (4a) dieser drei Auflager gelagert ist und der zweite Querträger (3b) des Rahmens (45) auf einem zweiten Auflager (4b) und einem dritten Auflager (4c) dieser drei Auflager gelagert ist.

5. Koordinatenmessgerät nach Anspruch 4, wobei zumindest eines der in vertikaler Richtung steifen Auflager (4a) in einer horizontalen Richtung (x) oder in zwei horizontalen Richtungen (x, y) beweglich ist, insbesondere in wenigstens einer horizontalen Richtung (x) linearbeweglich ist und/oder in wenigstens einer horizontalen Richtung (x) kippbar ist.

6. Koordinatenmessgerät nach Anspruch 5, wobei das in vertikaler Richtung steife Auflager der besagten Dreipunktlagerung monolithisch aus einem Materialblock hergestellt ist und die Beweglichkeit durch Materialschwächungen des Materialblocks erreicht wird.

7. Koordinatenmessgerät nach einem der Ansprüche 2 bis 5, wobei wenigstens eines der Auflager in vertikaler Richtung federnd ausgebildet ist.

8. Koordinatenmessgerät nach einem der Ansprüche 1 bis 7, wobei der steife Rahmen (45) der Mechanik (24) zusätzlich folgendes umfasst:
- eine fünfte vertikale Stütze (2e), mit deren oberen Ende der erste horizontale Längsträger (1a) steif verbunden ist
- eine sechste vertikale Stütze (2f), mit deren oberen Ende der zweite horizontale Längsträger (1b) steif verbunden ist
- einen dritten Querträger (3c), der quer zur Längsrichtung des ersten Längsträgers (1a) und des zweiten Längsträgers (1b) ausgerichtet ist und mit dem das untere Ende der fünften Stütze (2e) und das untere Ende der sechsten Stütze (2f) steif verbunden ist
und wobei die Lagerung der Mechanik wenigstens ein in vertikaler Richtung federndes Auflager (12a) aufweist, über das der dritte Querträger (3c) gelagert ist.

9. Koordinatenmessgerät nach wenigstens einem der Ansprüche 2 bis 7, wobei eine Werkstückauflage vorgesehen ist, auf der das zu vermessende Werkstück lagerbar ist, wobei diese Werkstückauflage so ausgeführt ist, dass der Kraftfluss der Gewichtskräfte des Werkstückes direkt in die Rahmenauflage eingeführt ist.

10. Koordinatenmessgerät nach einem der Ansprüche 1 bis 9, wobei die Werkstückauflage der Boden (26) selbst ist und der Boden (26) gleichzeitig auch die Rahmenauflage ist.

11. Koordinatenmessgerät nach einem der Ansprüche 1 bis 9, wobei die Werkstückauflage durch einen Werkstücktisch (9, 25) gebildet ist, der auf der Rahmenauflage (10, 23) gelagert ist.

12. Koordinatenmessgerät nach einem der vorhergehenden Ansprüche, wobei der erste Messschlitten einen zweiten Messschlitten (6) horizontal entlang des ersten Messschlittens (5) in einer zweiten horizontalen Koordinatenrichtung (y) beweglich lagert, wobei dieser zweite Messschlitten wiederum in einer dritten, vertikalen Koordinatenrichtung (z) einen dritten Messschlitten (7) beweglich lagert, an dessen unterem Ende der Sensor (8) befestigt ist.

13. Koordinatenmessgerät nach einem der vorhergehenden Ansprüche, wobei zumindest die Längsträger und/oder die Stützen und/oder Querträger als Hohlprofil ausgebildet sind.

14. Koordinatenmessgerät nach Anspruch 13, wobei das jeweilige Hohlprofil aus zwei der Länge nach verschweißten U-förmigen Hälften gebildet ist

15. Koordinatenmessgerät nach einem der vorhergehenden Ansprüche, wobei die steife Verbindung zwischen den Stützen und den Querträgern und/oder die steife Verbindung zwischen den Stützen und den Längsträgern eine Verschraubung oder eine Verschweißung ist.

16. Koordinatenmessgerät nach einem der vorhergehenden Ansprüche, wobei die Querträger in einer oder mehreren Aussparungen (27, 28) im Boden (26) angeordnet sind.

## Claims

1. Co-ordinate measuring device for measuring a workpiece (25), comprising
a) a sensor (8) for detecting the workpiece surface of the workpiece (25),
b) a mechanism (24) for moving the sensor (8) relative to the workpiece (25) in one or more co-ordinate directions (x, y, z), wherein the mechanism comprises the following:
b-a) a stiff frame (45) which comprises the following:
- a first horizontal longitudinal member (1a) with a first horizontal guide (26a),
- a second horizontal longitudinal member (1b) with a second horizontal guide (26b) which is oriented parallel to and at a distance from the first horizontal guide (26a),
- at least one first vertical support (2a) and a second vertical support (2c), wherein the first horizontal longitudinal member (1a) is stiffly connected to the upper end of the first vertical support (2a) and to the upper end of the second vertical support (2c),
- at least one third vertical support (2b) and a fourth vertical support (2d), wherein the second horizontal longitudinal member (1b) is stiffly connected to the upper end of the third vertical support (2b) and to the upper end of the fourth vertical support (2d),
- a first crossmember (3a) which is oriented transversely with respect to the longitudinal direction of the first longitudinal member (1a) and of the second longitudinal member (1b) and to which the lower end of the first support (2a) and the lower end of the third support (2b) are stiffly connected,
- a second crossember (3b) which is oriented transversely with respect to the longitudinal direction of the first longitudinal member (1a) and of the second longitudinal member (1b) and to which the lower end of the second support (2c) and the lower end of the fourth support (2d) are stiffly connected,
b-b) a mounting via which the first crossmember (3a) of the frame (45) and the second crossmember (3b) of the frame (45) are mounted,
b-c) a first measuring slide (5) for moving the sensor (8) in a first horizontal co-ordinate direction (x), which measuring slide is guided along the first horizontal guide (26a) and the second horizontal guide (26b).

2. Co-ordinate measuring device according to Claim 1, wherein the mounting of the frame (45) comprises three or more bearings (4a-c, 12a) via which the crossmembers (3a, 3b) are mounted on a frame seat (10, 23, 26).

3. Co-ordinate measuring device according to Claim 2, wherein the frame seat (10, 23, 26) is a substructure (10) or a floor (26) or a framework (23).

4. Co-ordinate measuring device according to one of Claims 2 to 3, wherein, of the bearings, precisely three bearings (4a-c) are stiff in the vertical direction, and wherein the first crossmember (3a) of the frame (45) is mounted on a first bearing (4a) of said three bearings, and the second crossmember (3b) of the frame (45) is mounted on a second bearing (4b) and on a third bearing (4c) of said three bearings.

5. Co-ordinate measuring device according to Claim 4, wherein at least one bearing (4a), which is stiff in the vertical direction, is moveable in a horizontal direction (x) or in two horizontal directions (x, y), in particular is linearly movable in at least one horizontal direction (x) and/or is tiltable in at least one horizontal direction (x).

6. Co-ordinate measuring device according to Claim 5, wherein the bearing, which is stiff in the vertical direction, of said three-point mounting is produced monolithically from a block of material, and the moveability is achieved by material weakening of the block of material.

7. Co-ordinate measuring device according to one of Claims 2 to 5, wherein at least one of the bearings is of resilient design in the vertical direction.

8. Co-ordinate measuring device according to one of Claims 1 to 7, wherein the stiff frame (45) of the mechanism (24) additionally comprises the following:
- a fifth vertical support (2e), to the upper end of which the first horizontal longitudinal member (1a) is stiffly connected,
- a sixth vertical support (2f), to the upper end of which the second horizontal longitudinal member (1b) is stiffly connected,
- a third crossmember (3c) which is oriented transversely with respect to the longitudinal direction of the first longitudinal member (1a) and of the second longitudinal member (1b) and to which the lower end of the fifth support (2e) and the lower end of the sixth support (2f) are stiffly connected,
and
wherein the mounting of the mechanism has at least one bearing which is resilient in vertical direction and via which the third crossmember (3c) is mounted.

9. Co-ordinate measuring device according to at least one of Claims 2 to 7, wherein a workpiece seat is provided on which the workpiece to be measured can be mounted, wherein said workpiece seat is designed in such a manner that the force flux of the weight of the workpiece is introduced directly into the frame seat.

10. Co-ordinate measuring device according to one of Claims 1 to 9, wherein the workpiece seat is the floor (26) itself, and the floor (26) at the same time is also the frame seat.

11. Co-ordinate measuring device according to one of Claims 1 to 9, wherein the workpiece seat is formed by a workpiece table (9, 25) which is mounted on the frame seat (10, 23).

12. Co-ordinate measuring device according to one of the preceding claims, wherein the first measuring slide supports a second measuring slide (6) in a manner moveable horizontally along the first measuring slide (5) in a second horizontal co-ordinate direction (y), wherein said second measuring slide, in turn, moveably supports a third measuring slide (7), to the lower end of which the sensor (8) is fastened, in a third vertical co-ordinate direction (z).

13. Co-ordinate measuring device according to one of the preceding claims, wherein at least the longitudinal members and/or the supports and/or crossmembers are designed as a hollow profile.

14. Co-ordinate measuring device according Claim 13, wherein the respective hollow profile is formed from two U-shaped halves welded together lengthwise.

15. Co-ordinate measuring device according to one of the preceding claims, wherein the stiff connection between the supports and the crossmembers and/or the stiff connection between the supports and the longitudinal members is a screw connection or welded connection.

16. Co-ordinate measuring device according to one of the preceding claims, wherein the crossmembers are arranged in one or more recesses (27, 28) in the floor (26).

## Revendications

1. Instrument de mesure de coordonnées pour la mesure d'une pièce (25), comprenant:
a) un capteur (8) pour la détection de la surface de pièce de la pièce (25),
b) un mécanisme (24) pour le déplacement du capteur (8) par rapport à la pièce (25) dans une ou plusieurs directions de coordonnées (x, y, z), dans lequel le mécanisme comprend les éléments suivants:
b-a) un cadre rigide (45), qui comprend:
- un premier longeron horizontal (1a) avec un premier guidage horizontal (26a),
- un deuxième longeron horizontal (1b) avec un deuxième guidage horizontal (26b), qui est orienté parallèlement et à distance du premier guidage horizontal (26a),
- au moins un premier montant vertical (2a) et un deuxième montant vertical (2c), dans lequel le premier longeron horizontal (1a) est relié rigidement à l'extrémité supérieure du premier montant vertical (2a) et à l'extrémité supérieure du deuxième montant vertical (2c),
- au moins un troisième montant vertical (2b) et un quatrième montant vertical (2d), dans lequel le deuxième longeron horizontal (1b) est relié rigidement à l'extrémité supérieure du troisième montant vertical (2b) et à l'extrémité supérieure du quatrième montant vertical (2d),
- une première traverse (3a), qui est orientée transversalement à la direction longitudinale du premier longeron (1a) et du deuxième longeron (1b) et à laquelle l'extrémité inférieure du premier montant (2a) et l'extrémité inférieure du troisième montant (2b) est reliée de façon rigide,
- une deuxième traverse (3b), qui est orientée transversalement à la direction longitudinale du premier longeron (1a) et du deuxième longeron (1b) et à laquelle l'extrémité inférieure du deuxième montant (2c) et l'extrémité inférieure du quatrième montant (2d) est reliée de façon rigide,
b-b) un support, par lequel la première traverse (3a) du cadre (45) et la deuxième traverse (3b) du cadre (45) sont supportées,
b-c) un premier chariot de mesure (5) pour le déplacement du capteur (8) dans une première direction de coordonnées horizontale (x) qui est guidé le long du premier guidage horizontal (26a) et du deuxième guidage horizontal (26b).

2. Instrument de mesure de coordonnées selon la revendication 1, dans lequel le support du cadre (45) comprend trois pieds d'appui ou plus (4a-c, 12a) par lesquels les traverses (3a, 3b) sont supportées sur une base de cadre (10, 23, 26).

3. Instrument de mesure de coordonnées selon la revendication 2, dans lequel la base de cadre (10, 23, 26) est une fondation (10) ou un sol (26) ou un châssis (23).

4. Instrument de mesure de coordonnées selon l'une quelconque des revendications 2 à 3, dans lequel, parmi les pieds d'appui, exactement trois pieds d'appui (4a-c) sont rigides en direction verticale et dans lequel la première traverse (3a) du cadre (45) est supportée sur un premier pied d'appui (4a) de ces trois pieds d'appui et la deuxième traverse (3b) du cadre (45) est supportée sur un deuxième pied d'appui (4b) et un troisième pied d'appui (4c) de ces trois pieds d'appui.

5. Instrument de mesure de coordonnées selon la revendication 4, dans lequel au moins un (4a) des pieds d'appui rigides en direction verticale est mobile dans une direction horizontale (x) ou dans deux directions horizontales (x, y), en particulier est mobile linéairement dans au moins une direction horizontale (x) et/ou est pivotant dans au moins une direction horizontale (x).

6. Instrument de mesure de coordonnées selon la revendication 5, dans lequel le pied d'appui rigide en direction verticale dudit support à trois points est fabriqué d'un seul tenant avec un bloc de matière et la mobilité est obtenue par des affaiblissements de matière du bloc de matière.

7. Instrument de mesure de coordonnées selon l'une quelconque des revendications 2 à 5, dans lequel au moins un des pieds d'appui est réalisé de façon suspendue en direction verticale.

8. Instrument de mesure de coordonnées selon l'une quelconque des revendications 1 à 7, dans lequel le cadre rigide (45) du mécanisme (24) comprend en plus les éléments suivants:
- un cinquième montant vertical (2e), à l'extrémité supérieure duquel le premier longeron horizontal (1a) est rigidement relié,
- un sixième montant vertical (2f), à l'extrémité supérieure duquel le deuxième longeron horizontal (1b) est rigidement relié,
- une troisième traverse (3c), qui est orientée transversalement à la direction longitudinale du premier longeron (1a) et du deuxième longeron (1b) et à laquelle l'extrémité inférieure du cinquième montant (2e) et l'extrémité inférieure du sixième montant (2f) est rigidement reliée,
et dans lequel le support du mécanisme présente au moins un pied d'appui (12a) suspendu en direction verticale, par lequel la troisième traverse (3c) est supportée.

9. Instrument de mesure de coordonnées selon au moins une des revendications 2 à 7, dans lequel il est prévu un support de pièce, sur lequel la pièce à mesurer peut être déposée, dans lequel ce support de pièce est configuré de telle manière que le flux de force dû aux forces pondérales de la pièce soit envoyé directement dans la base de cadre.

10. Instrument de mesure de coordonnées selon l'une quelconque des revendications 1 à 9, dans lequel le support de pièce est le sol (26) lui-même et le sol (26) est en même temps aussi la base de cadre.

11. Instrument de mesure de coordonnées selon l'une quelconque des revendications 1 à 9, dans lequel le support de pièce est formé par une table porte-pièce (9, 25), qui est supportée sur la base de cadre (10, 23).

12. Instrument de mesure de coordonnées selon l'une quelconque des revendications précédentes, dans lequel le premier chariot de mesure supporte un deuxième chariot de mesure (6) de façon mobile horizontalement le long du premier chariot de mesure (5) dans une deuxième direction de coordonnées horizontale (y), dans lequel ce deuxième chariot de mesure supporte un troisième chariot de mesure (7) de nouveau de façon mobile dans une troisième direction de coordonnées verticale (z), à l'extrémité inférieure duquel le capteur (8) est fixé.

13. Instrument de mesure de coordonnées selon l'une quelconque des revendications précédentes, dans lequel au moins les longerons et/ou les montants et/ou les traverses sont constitués par des profilés creux.

14. Instrument de mesure de coordonnées selon la revendication 13, dans lequel le profilé creux respectif est formé de deux moitiés en forme de U soudées suivant la longueur.

15. Instrument de mesure de coordonnées selon l'une quelconque des revendications précédentes, dans lequel la liaison rigide entre les montants et les traverses et/ou la liaison rigide entre les montants et les longerons est un assemblage vissé ou un assemblage soudé.

16. Instrument de mesure de coordonnées selon l'une quelconque des revendications précédentes, dans lequel les traverses sont disposées dans un ou plusieurs évidements (27, 28) dans le sol (26).
